# EUROPEAN PATENT APPLICATION

(11) **EP 4 417 160 A1**
(43) Date of publication of application: **21.08.2024**
(21) Application number: 24155579.6
(22) Date of filing: 02.02.2024
(51) Int. Cl.: A61C 8/00

(54) **IMPLANT FOR DENTAL PROSTHESIS**

(30) Priority: 15.02.2023 TW 112105458
(71) Applicant: Star Generation Limited., Apia (WS)
(72) Inventor: CHEN, Chun-Leon, 110202 Taipei City (TW); CHEN, Nicholas-Michael Hongyui, Las Vegas, NV 89146 (US); CHEN, Alec-Matthew Kwon-How, Las Vegas, NV 89146 (US); CHEN, Nolan-Montgomery, Las Vegas, NV 89146 (US)
(74) Representative: Cabinet Chaillot

(57) **Abstract**

An implant for dental prosthesis includes an implant having a sunken end formed into an abutment receiving section and a fastening section provided with a first female thread; an abutment being internally formed with an open-end passage provided with a second female thread and being fitted in the abutment receiving section to communicate with the fastening section; and a screw fastening member extending into both the open-end passage and the fastening section and being externally provided with a first male thread meshing with the first female thread and a second male thread meshing with the second female thread. With these arrangements, both the implant and the abutment are spirally connected to the screw fastening member to create frictional forces between each of them and the screw fastening member, so that the screw fastening member is prevented from loosening from the implant due to rotating of the screw fastening member.

## Description

### FIELD OF THE INVENTION

The present invention relates to an implant for dental prosthesis that can be fastened into the alveolar bone, and more particularly, to an implant for dental prosthesis that is able to prevent a screw fastening member from rotating and loosening from the implant.

### BACKGROUND OF THE INVENTION

The teeth growth is divided into two stages. In the first stage, baby teeth start to grow; and in the second stage, the baby teeth start to fall out and permanent teeth harder than the baby teeth start to grow. Once the permanent teeth have grown, no other new teeth would grow. In the event any of the permanent teeth gains severe tooth defect, such as tooth decay, permanent tooth crack, etc., either the defective part of the permanent tooth is repaired or the whole defective permanent tooth is extracted. The damaged permanent tooth or the extraction of permanent tooth would not only badly affect a person's good looking, but also cause lateral luxation of adjacent teeth. Dental lateral luxation would also result in malocclusion and difficulties in chewing and speaking. Currently, to avoid the condition of dental lateral luxation, many dental patients would visit a dentist to repair their defective teeth.

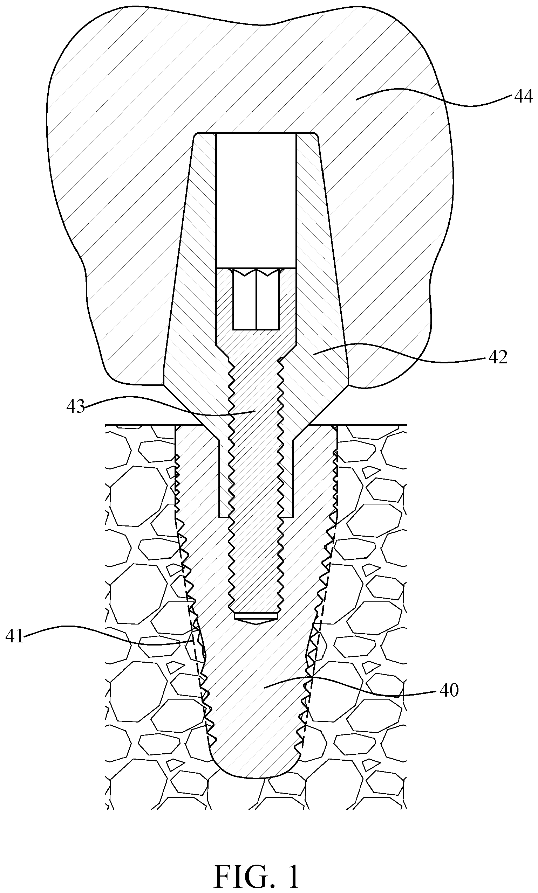

With the increasingly improved tooth restoration skills, some of the dental patients use dental implantation to restore their defective teeth. Please refer to Fig. 1. In the procedures of dental implantation, an alveolar hole 41 is formed on the dental patient's alveolar bone using a drill; and an implant 40 is placed in the alveolar hole 41 with a part of the implant 40 being situated in the alveolar hole 41. The remaining part of the implant 40 is protruded from the alveolar hole 41 for mounting an abutment 42 thereto. Thereafter, a screw fastening member 43 is extended through the abutment 42 to spirally connect to an interior of the implant 40, so that the abutment 42 is in tight contact with the implant 40 without the risk of separating from the implant 40 easily. Lastly, a crown 44 is fitted over the abutment 42 to complete the restoring operation for the patient's defective tooth.

However, since the screw fastening member 43 is spirally connected to the implant 40 only, the screw fastening member 43 will loosen from the implant 40 once it is rotated in a reverse direction. Under this situation, the implant 40 is no longer in tight contact with the abutment 42 and a gap tends to occur between the implant 40 and the abutment 42 to result in separation of the abutment 42 from the implant 40.

### SUMMARY OF THE INVENTION

A primary object of the present invention is to provide an implant for dental prosthesis with improved connection among different components that include an implant, an abutment and a screw fastening member, so that both the implant and the abutment are spirally connected to the screw fastening member to create frictional forces between each of the implant and the abutment and the screw fastening member. Thus, the screw fastening member is prevented from rotating and loosening from the implant.

To achieve the above and other objects, the implant for dental prosthesis according to the prevent invention includes an implant, an abutment, and a screw fastening member. The implant is externally provided with an outer thread section and an end of the implant has a blind hole. The blind hole includes an abutment receiving section and a fastening section having a profile smaller than that of the abutment receiving section. And, the fastening section internally includes a first female thread.

The abutment includes an implant connecting section disposed in the abutment receiving section of the implant and a crown connecting section located outside the blind hole of the implant. The abutment internally includes an open-end passage extending from the implant connecting section to the crown connecting section, and the open-end passage is divided into a longitudinal lower slot located adjacent to the fastening section of the implant and a longitudinal upper slot having a bore size larger than that of the longitudinal lower slot. The longitudinal lower slot is internally provided with a second female thread.

The screw fastening member includes a head portion disposed in the longitudinal upper slot of the open-end passage and a threaded portion extending into both the fastening section of the implant and the longitudinal lower slot of the open-end passage. The threaded portion is provided with a first male thread for meshing with the first female thread and a second male thread for meshing with the second female thread on the abutment.

In a preferred embodiment of the present invention, the first male thread has a spiral extending direction different from that of the second male thread, and both the first and the second male thread are extended from an end of the threaded portion to another end of the threaded portion, so that the first male thread intersects the second male thread. Wherein, the screw fastening member is extended first into the open-end passage for the second male thread to spirally mesh with the second female thread. Then, the screw fastening member is extended further into the fastening section for the first male thread to spirally mesh with the first female thread.

In another preferred embodiment of the present invention, the first male thread has a spiral extending direction the same as that of the second male thread, so that the first and the second male thread are arranged parallelly in the same direction. Wherein, the first male thread has a thread depth larger than that of the second male thread.

In a further preferred embodiment of the present invention, an inner surface of the abutment receiving section is provided with an auxiliary female thread that has a spiral extending direction the same as that of the first male thread; and an outer surface of the implant connecting section is provided with an auxiliary male thread meshing with the auxiliary female thread.

The present invention is characterized in that the implant and the abutment are internally provided with a first female thread and a second female thread, respectively; and the screw fastening member is externally provided with a first and a second male thread. The first male thread meshes with the first female thread, and the second male thread meshes with the second female thread. With these arrangements, both the implant and the abutment are spirally connected to the screw fastening member to create frictional forces between each of the implant and the abutment and the screw fastening member, and both the screw fastening member and the abutment are prevented from loosening from the implant due to rotating.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a sectional view of a conventional implant for dental prosthesis;
Fig. 2 is an assembled perspective view of an implant for dental prosthesis according to a first preferred embodiment of the present invention;
Fig. 3 is a partially sectioned exploded view of the implant for dental prosthesis according to the first preferred embodiment of the present invention;
Fig. 4 is a simplified view of Fig. 3;
Fig. 5 is an assembled sectional view of the implant for dental prosthesis according to the first preferred embodiment of the present invention;
Fig. 6 is a partially exploded sectional view of the implant for dental prosthesis according to the first preferred embodiment of the present invention showing how an abutment is assembled to the implant via a screw fastening member;
Fig. 7 is a partially sectioned exploded view of an implant for dental prosthesis according to a second preferred embodiment of the present invention;
Fig. 8 is an assembled sectional view of the implant for dental prosthesis according to the second preferred embodiment of the present invention;
Fig. 9 is an enlarged view of the encircled area A of Fig. 7;
Fig. 10 is a partially exploded sectional view of the implant for dental prosthesis according to the second preferred embodiment of the present invention, showing how the implant, the screw fastening member and the abutment are assembled together;
Fig. 11 is an assembled sectional view of an implant for dental prosthesis according to a third preferred embodiment of the present invention;
Fig. 12A is an enlarged view of the encircled area B of Fig. 11;
Fig. 12B is an enlarged view of the encircled area C of Fig. 11; and
Fig. 13 is an assembled sectional view of an implant for dental prosthesis according to a fourth preferred embodiment of the present invention.

### DETAILED DESCRIPTION OF THE PREFERRED EMBODIMENTS

The present invention will now be described with some preferred embodiments thereof and by referring to the accompanying drawings. For the purpose of easy to understand, elements that are the same in the preferred embodiments are denoted by the same reference numerals.

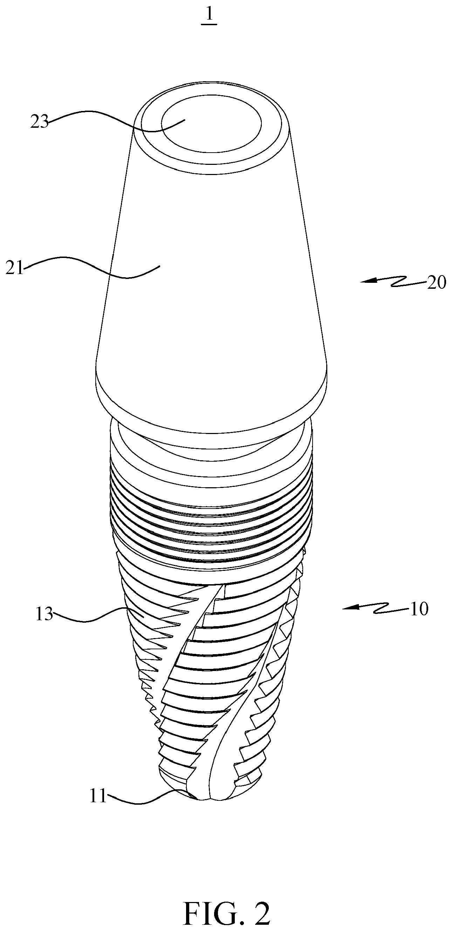

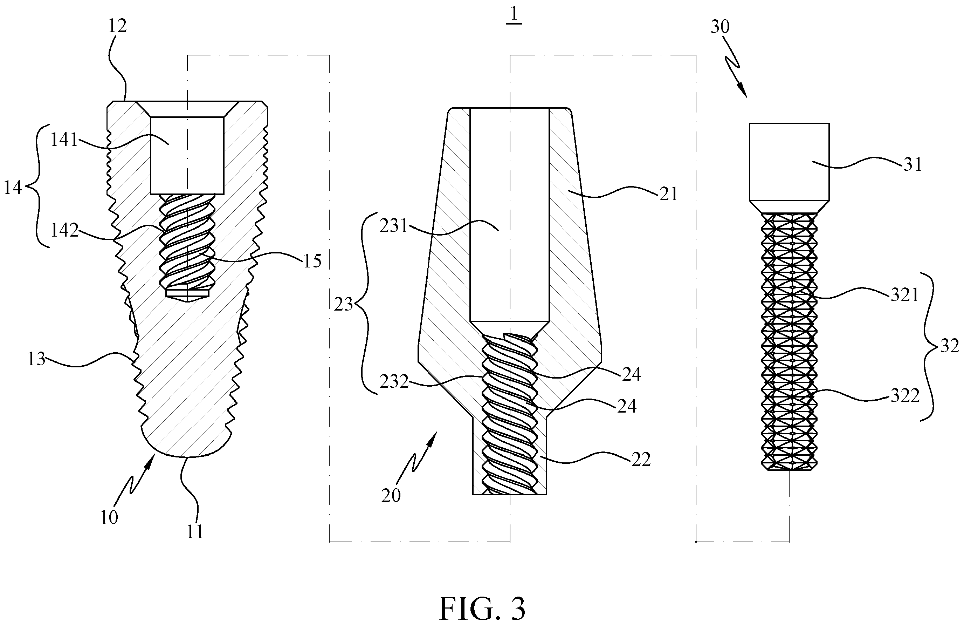

Please refer to Figs. 2 and 3. An implant for dental prosthesis according to a first preferred embodiment of the present invention is herein generally denoted by reference numeral 1 and mainly includes an implant 10, an abutment 20, and a screw fastening member 30. In the first preferred embodiment, the implant 10 has two opposite ends, which are an implanting end 11 and an assembling end 12, respectively. The implant 10 is externally formed with an outer thread section 13, which is located between the implanting end 11 and the assembling end 12 for placing into a patient's alveolar bone. Further, the implant 10 internally defines a blind hole 14 sunken from the assembling end 12 toward the implanting end 11. As can be seen in Fig. 3, a part of the blind hole 14 located closer to the assembling end 12 is configured as an abutment receiving section 141, while the other part of the blind hole 14 is configured as a fastening section 142, which has a profile smaller than that of the abutment receiving section 141. The fastening section 142 of the blind hole 14 is internally provided with a first female thread 15 spirally extended clockwise; and the abutment receiving section 141 is in the form of a cylindrical recess.

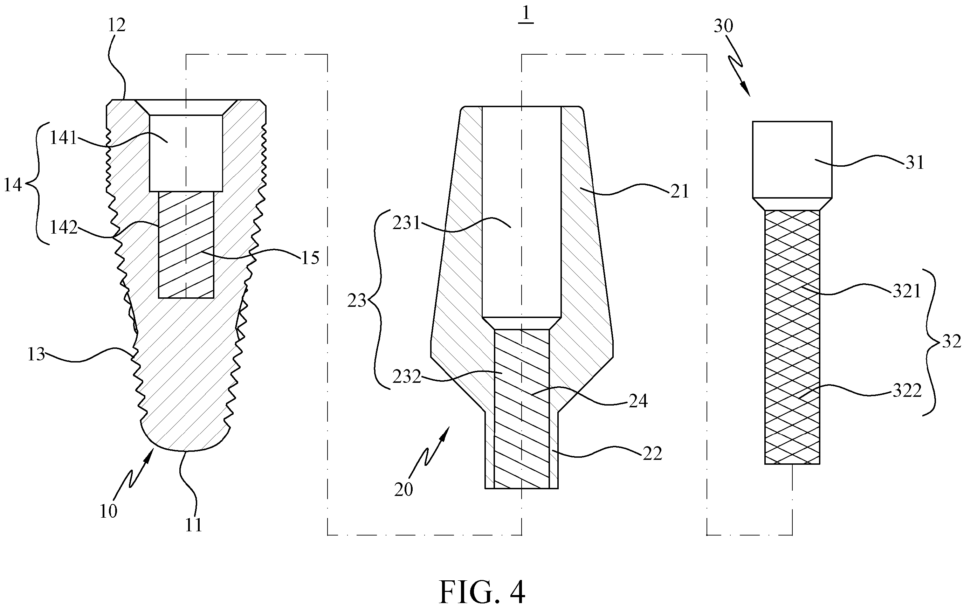

Please refer to Figs. 2 and 3. The abutment 20 includes a crown connecting section 21 and an implant connecting section 22, and the crown connecting and the implant connecting section are sequentially arranged from top to bottom of the abutment 20. The abutment 20 is internally formed with an open-end passage 23, that extending from the crown connecting section 21 into the implant connecting section 22. An upper half of the open-end passage 23 is in the form of a longitudinal upper slot 231 and a lower half of the open-end passage 23 is in the form of a longitudinal lower slot 232 having a bore size smaller than that of the longitudinal upper slot 231. The longitudinal lower slot 232 of the open-end passage 23 is internally provided with a second female thread 24, which spirally extends in a direction opposite to the spiral extending direction of the first female thread 15. That is, the second female thread 24 spirally extends counterclockwise. Please refer to Figs. 3 and 4. The implant connecting section 22 extends into the abutment receiving section 141 of the implant 10, such that the fastening section 142 of the blind hole 14 is communicable with the open-end passage 23 while the crown connecting section 21 is located outside the blind hole 14.

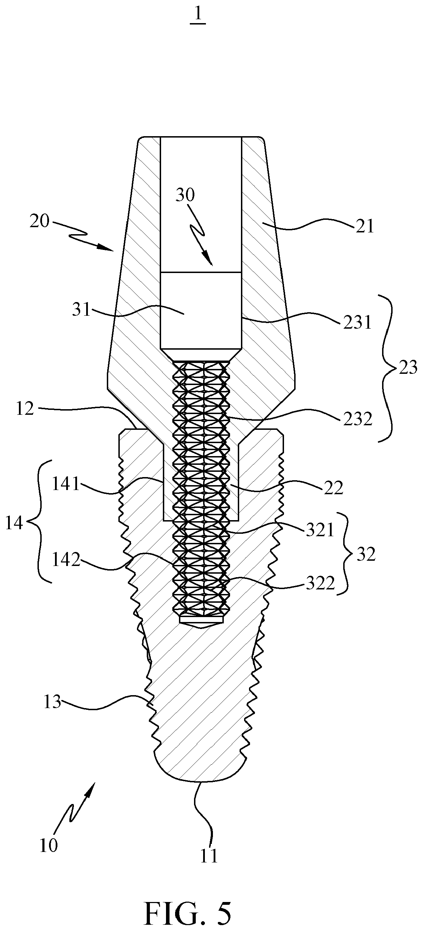

Please refer to Figs. 3, 4 and 5 at the same time. The screw fastening member 30 includes a head portion 31 and a threaded portion 32. The threaded portion 32 is provided with a first male thread 321 and a second male thread 322. The first male thread 321 meshes with the first female thread 15 while the second male thread 322 meshes with the second female thread 24, such that the first male thread 321 spirally extends in a direction different from the spiral extending direction of the second male thread 322. In the first preferred embodiment, both the first and the second male thread 321, 322 extend from an end of the threaded portion 32 to another end of the threaded portion 32, such that the first male thread 321 intersects the second male thread 322. As shown in Figs. 4 and 5, the head portion 31 is located in the longitudinal upper slot 231 of the open-end passage 23 while the threaded portion 32 extends into the longitudinal lower slot 232 of the open-end passage 23 and the fastening section 142 of the blind hole 14, such that the first male thread 321 is spirally engaged with the first female thread 15 and the second male thread 322 is spirally engaged with the second female thread 24. With these arrangements, both the implant 10 and the abutment 20 are screwed to the screw fastening member 30, so that frictional forces are created not only between the screw fastening member 30 and the implant 10, but also between the screw fastening member 30 and the abutment 20 to effectively prevent the screw fastening member 30 from loosening from the implant 10 and also prevent the abutment 20 from separating from the implant 10 due to rotating of the screw fastening member 30. In the first preferred embodiment, when the screw fastening member 30 is turned clockwise to loosen it, the second female thread 24 is brought to more tightly screw to the second male thread 322, making it uneasy to form any gap between the abutment 20 and the implant 10 and accordingly, preventing the abutment 20 from separating from the implant 10. On the other hand, when the screw fastening member 30 is turned counterclockwise to loosen it, the first female thread 15 is brought to more tightly screw to the first male thread 321, preventing the abutment 20 from separating from the implant 10.

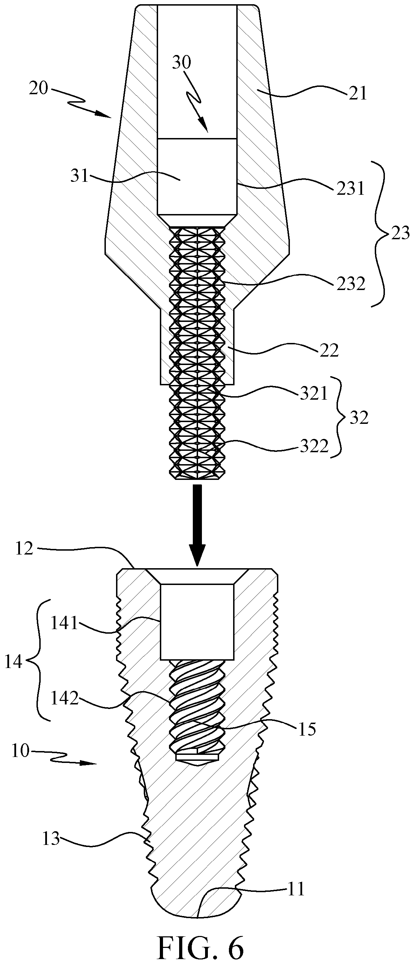

Please refer to Fig. 6, which describes the steps of assembling the implant 10, the abutment 20 and the screw fastening member 30 according to the first preferred embodiment of the present invention. As shown, to assemble the implant for dental prosthesis 1 of the present invention, first screw the threaded portion 32 of the screw fastening member 30 counterclockwise into the open-end passage 23 of the abutment 20 for the second male thread 322 of the threaded portion 32 to mesh with the second female thread 24 of the abutment 20. When the head portion 31 of the screw fastening member 30 is in contact with an interface between the longitudinal upper slot 231 and the longitudinal lower slot 232 of the open-end passage 23, a part of the threaded portion 32 of the screw fastening member 30 is protruded from the open-end passage 23. Then, the part of the thread portion 32 protruded from the open-end passage 23 is screwed clockwise into the fastening section 142 of the blind hole 14, so that the abutment 20 rotates clockwise relative to the implant 10 and the first male thread 321 of the threaded portion 32 meshes with the first female thread 15 of the implant 10.

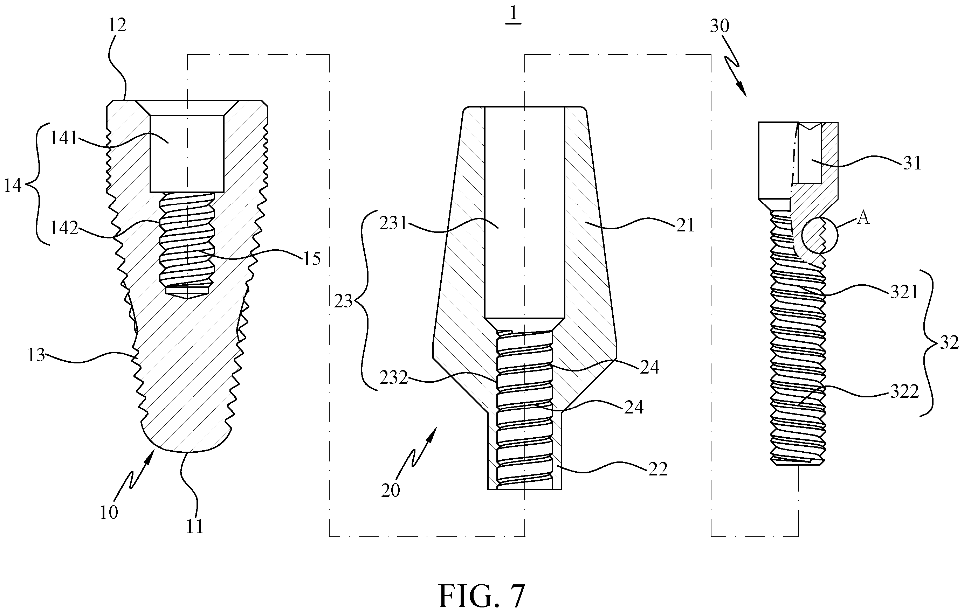

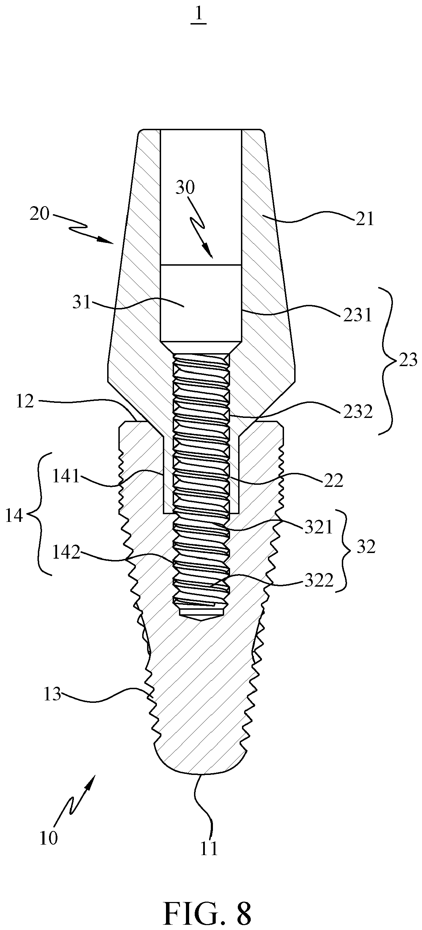

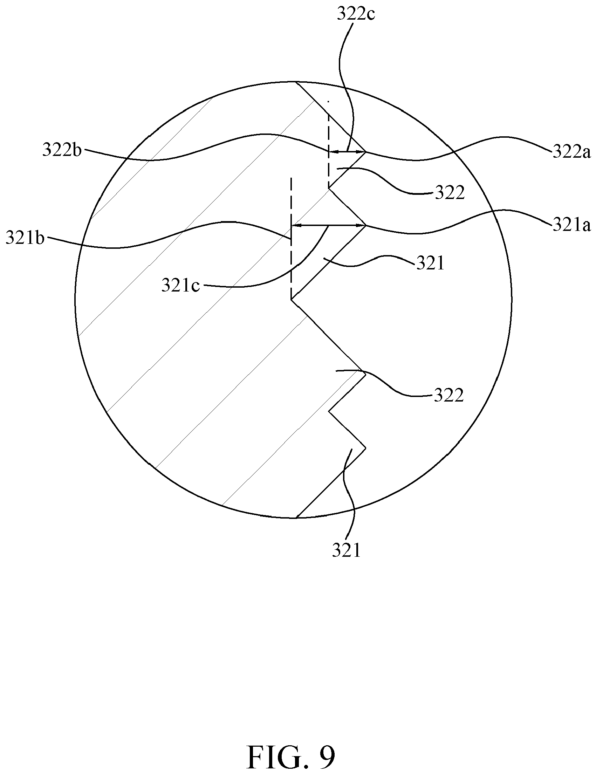

Please refer to Figs. 7 and 8, in which an implant for dental prosthesis 1 according to a second preferred embodiment of the present invention is shown. The second preferred embodiment is different from the first one in that while the abutment receiving section 141 of the implant 10 thereof is also in a the form of a cylindrical recess, both the first female thread 15 of the implant 10 and the second female thread 24 of the abutment 20 are extended spirally clockwise, such that both the first male thread 321 and the second male thread 322 of the threaded portion 32 are also extended spirally clockwise. Wherein, the first male thread 321 has a taper angle the same as that of the second male thread 322, so that the first male thread 321 and the second male thread 322 are arranged parallelly in the same direction. In the second preferred embodiment, as shown in Fig. 9, the highest point and the lowest point on the first male thread 321 are referred to as the first crest 321a and the first root 321b of the first male thread 321, respectively. Further, the first male thread 321 has a first depth 321c indicating a vertical distance between the first crest 321a and the first root 321b. Similarly, the highest and the lowest point on the second male thread 322 are referred to as the second crest 322a and the second root 322b of the second male thread 322, respectively. Further, the second male thread 322 has a second depth 322c indicating a vertical distance between the second crest 322a and the second root 322b. As shown, in the second preferred embodiment, the first crest 321a is located at a height position the same as that of the second crest 322a while the first root 321b is located at a height position lower than that of the second root 322b, so that the first thread depth 321c is larger than the second thread depth 322c.

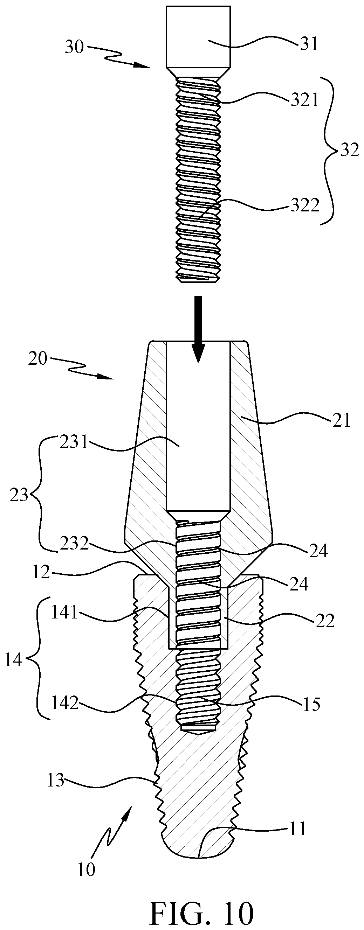

Please refer to Fig. 10, which shows how the implant 10, the abutment 20, and the screw fastening member 30 in the second preferred embodiment are assembled together. As shown, the implant connecting section 22 of the abutment 20 is extended into the abutment receiving section 141 in the blind hole 14 first for the open-end passage 23 of the abutment 20 to communicate with the fastening section 142 in the blind hole 14. Then, the threaded portion 32 of the screw fastening member 30 is rotated clockwise to screw into the open-end passage 23 for the second male thread 322 of the threaded portion 32 to mesh with the second female thread 24 of the abutment 20. The threaded portion 32 is then screwed further into the fastening portion 142 for the first male thread 321 of the threaded portion 32 to mesh with the first female thread 15 of the implant 10.

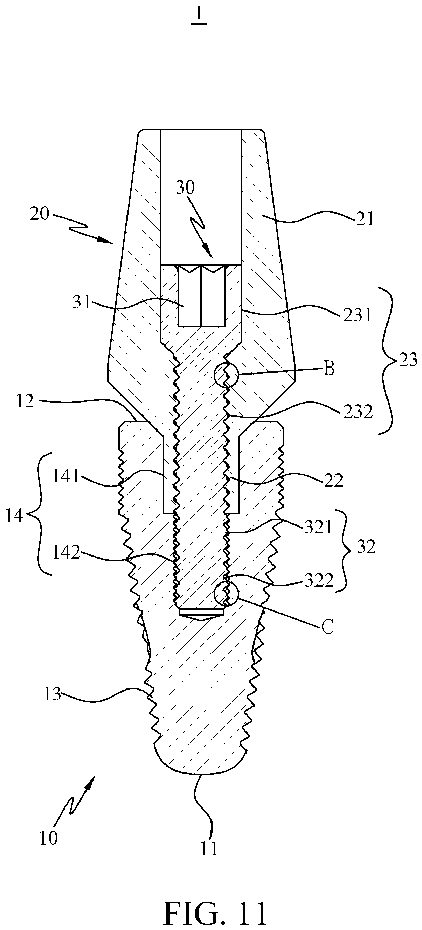

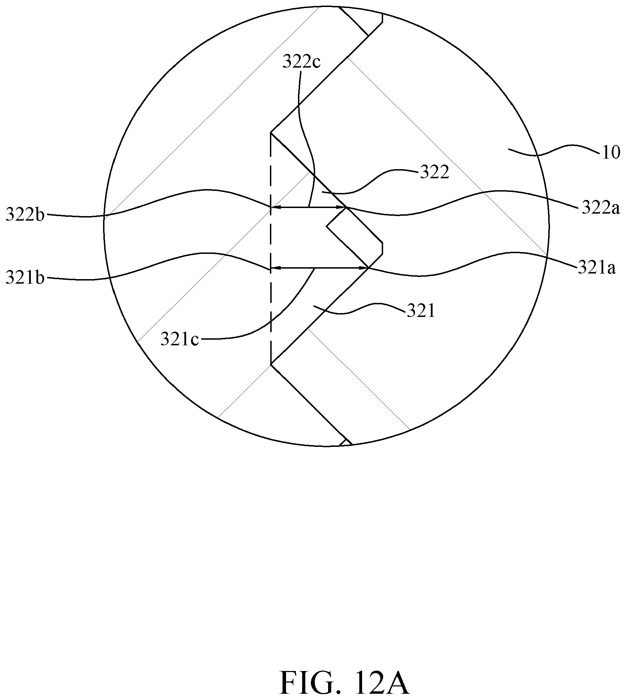

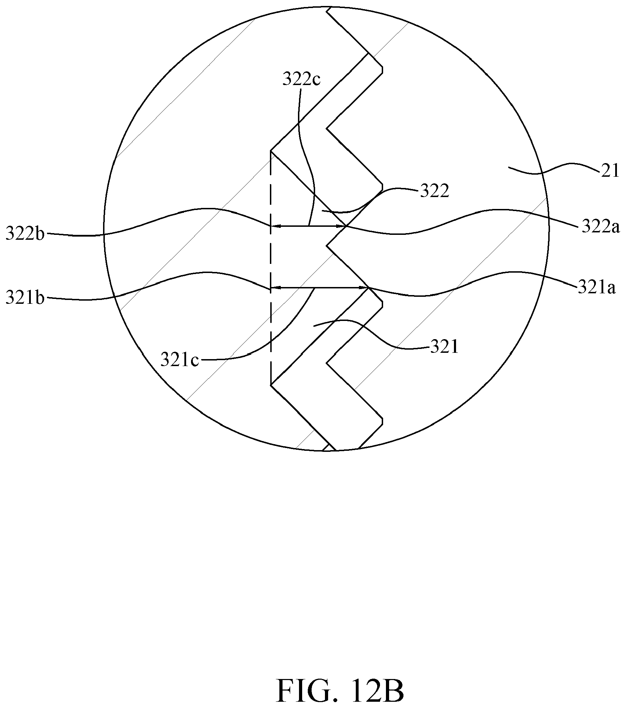

Please refer to Figs. 11, 12A and 12B, which show a third preferred embodiment of the present invention. The third preferred embodiment is different from the second one in the first and second male threads 321, 322 of the screw fastening member 30. As shown, in the third preferred embodiment, the first male thread 321 has a taper angle larger than that of the second male thread 322, so that the first male thread 321 and the second male thread 322 intersect each other. Further, the first male thread 321 has a first crest 321a located at a height position higher than that of the second crest 322a; and the first male thread 321 has a first root 321b located at a height position the same as that of the second root 322b and accordingly, the first depth 321c of the first male thread 321 is larger than the second depth 322c of the second male thread 322.

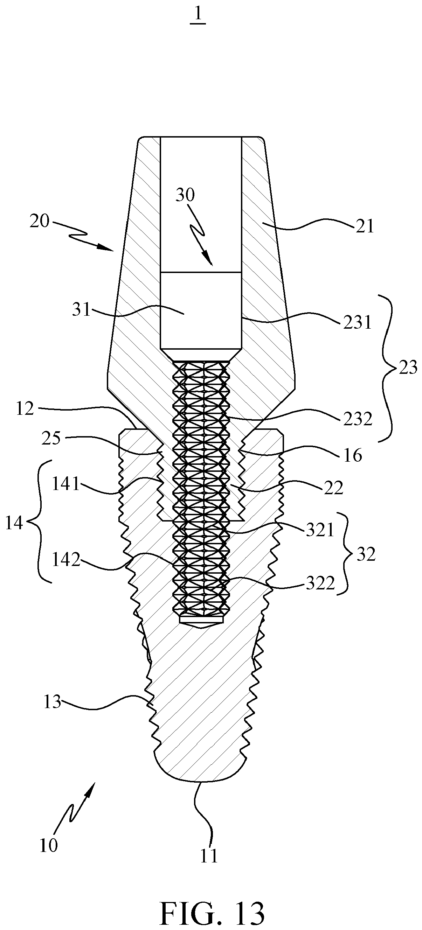

Please refer to Fig. 13, in which a fourth preferred embodiment of the present invention is shown. The fourth preferred embodiment is different from the first one in the structural configuration of the implant 10 and the abutment 20. In the fourth preferred embodiment, the abutment receiving section 141 of the implant 10 is provided on an inner surface with an auxiliary female thread 16 while the implant connecting section 22 of the abutment 20 is provided on an outer surface with an auxiliary male thread 25, which meshes with the auxiliary female thread 16. The auxiliary female thread 16 spirally extends in a direction the same as that of the first male thread 321 of the threaded portion 32 of the screw fastening member 30.

The present invention has been described with some preferred embodiments thereof and it is understood that many changes and modifications in the described embodiments can be carried out without departing from the scope and the spirit of the invention that is intended to be limited only by the appended claims.

## Claims

1. An implant for dental prosthesis, comprising:
an implant being externally formed with an outer thread section, and an end of the implant having a blind hole ; the blind hole internally defining an abutment receiving section and a fastening section having a profile smaller than that of the abutment receiving section; and the fastening section being internally provided with a first female thread;
an abutment including a crown connecting section located outside the blind hole and an implant connecting section received in the abutment receiving section of the implant, and the crown connecting and the implant connecting section are sequentially arranged from top to bottom of the abutment; the abutment being internally formed with an open-end passage extending from the crown connecting section into the implant connecting section; the open-end passage including a longitudinal lower slot located adjacent to the fastening section of the implant and a longitudinal upper slot having a bore size larger than that of the longitudinal lower slot; and the longitudinal lower slot being internally provided with a second female thread; and
a screw fastening member including a head portion disposed in the longitudinal upper slot of the open-end passage and a threaded portion extending into both the fastening section of the implant and the longitudinal lower slot of the open-end passage; and the threaded portion being provided with a first male thread meshing with the first female thread on the implant and a second male thread meshing with the second female thread on the abutment.

2. The implant for dental prosthesis as claimed in claim 1, wherein the first male thread has a spiral extending direction different from the spiral extending direction of the second male thread.

3. The implant for dental prosthesis as claimed in claim 2, wherein both the first and the second male thread are extended from an end of the threaded portion to another end of the threaded portion, such that the first male thread intersects the second male thread.

4. The implant for dental prosthesis as claimed in claim 2, wherein the screw fastening member is extended into the open-end passage of the abutment first for the second male thread to mesh with the second female thread, and the screw fastening member is extended further into the fastening section of the implant for the first male thread to mesh with the first female thread.

5. The implant for dental prosthesis as claimed in claim 1, wherein the first male thread has a spiral extending direction the same as the spiral extending direction of the second male thread, such that the first male thread and the second male thread are arranged parallelly in the same direction; and the first male thread having a thread depth larger than that of the second male thread.

6. The implant for dental prosthesis as claimed in claim 1, wherein an inner surface of the abutment receiving section is provided with an auxiliary female thread that has a spiral extending direction the same as that of the first male thread; and an outer surface of the implant connecting section being provided with an auxiliary male thread meshing with the auxiliary female thread.
